# EUROPEAN PATENT APPLICATION

(11) **EP 4 538 433 A1**
(43) Date of publication of application: **16.04.2025**
(21) Application number: 24201103.9
(22) Date of filing: 18.09.2024
(51) Int. Cl.: D01D 4/02, D04H 1/56, D01D 5/098, D01D 5/253

(54) **TUBE FOR MULTIROW COAXIAL MELT-BLOWN SYSTEM**

(30) Priority: 13.10.2023 IT 202300021345
(71) Applicant: Fratelli Ceccato Milano S.r.l., 20123 Milano (IT)
(72) Inventor: ANGELICO, Mr. Giuseppe, 64100 TERAMO (IT)
(74) Representative: Lunati & Mazzoni S.r.L.

(57) **Abstract**

A tube (1) for a multirow coaxial melt-blown system is provided, defining a development axis (1a) and comprising at least one closed inner surface (2) that extends around the development axis (1a) and defining a plurality of mutually identical profiles (3) arranged one after the other along the development axis (1a), wherein the profile (3) is defined on a sectional plane (1b) perpendicular to the development axis (1a), defining a first extension area on the sectional plane (1b), and is inscribable in a circle defined on the sectional plane (1b) and defining a second extension area on the sectional plane (1b), and wherein the first extension area is less than 90% of the second extension area.

## Description

The present invention relates to a tube for a multirow coaxial melt-blown system of the type specified in the preamble of the first claim.

In particular, the present invention relates to an element that is part of a system designed to enable the making of extruded polymer filaments intended to directly or indirectly produce a non-woven fabric, also known as TNT.

As is known, non-woven fabric, or TNT, is an industrial product similar to a fabric but produced through processes different from weaving and knitting.

Therefore, in a non-woven fabric, the fibers are arranged randomly without any discernible ordered structure, whereas in a fabric, the fibers typically have two predominant and orthogonal directions, commonly referred to as weft and warp. Currently, a variety of products containing TNT are produced, depending on the production technique used, which is primarily linked to the intended use of the product.

Particularly, high-quality TNT is used for hygienic and sanitary products, while lower-quality TNT is predominantly used in geotextiles.

From a technical point of view, non-woven fabrics, also known by the English term "nonwoven fabric," can be generally classified into spunlace, spunbond, and melt-blown.

Within the melt-blown technology, multirow coaxial melt-blown systems, or multirow coaxial melt-blown systems, are particularly known.

In general, these systems provide for the stretching of the polymer that exits from the tubes, arranged in rows, through air that passes coaxially from the outside of the tube and pushes the fiber downward.

In particular, multirow coaxial melt-blown systems include components defining coaxial holes arranged in rows adapted to accommodate at least part of the aforementioned tubes, which pass coaxially inside the holes to allow the diffusion of polymer fluid and, at the same time, allow the diffusion of air or gas from at least part of the holes.

Usually, these systems include devices called spin packs, which consist of several different components designed to interact with each other. Typically, a spin pack is composed of a spinneret and a diffusion device that includes one or more components known as air plates.

Furthermore, the spinneret can itself be connected to a taper and/or a breaker plate. If present, the breaker plate is also connected to an extrusion head designed to convey at least polymer fluid and possibly also air or gas under pressure to the spin pack. The breaker plate and taper fundamentally share the same characteristics as the breaker plate and taper used in spunbond and melt-blown technologies. Multirow coaxial melt-blown systems including spin packs, however, do not include a diffusion device having a support adapted to support an air knife, do not have a cusp, nor do they have a simple die designed solely for polymer outflow.

In multirow coaxial melt-blown systems, the spinneret is essentially a support that holds the tubes designed to expel polymer filaments. The diffusion device is thus attached to the spinneret and includes an intermediate plate or air plate, which allows the passage of the said tubes and the outflow of air or other pressurized gas, and an external mask, or external air plate, usually of a divergent shape, through which the polymer filament outflows, pushed downward by air, before reaching the conveyor belts present in any non-woven fabric manufacturing plant.

The described prior art technique has some significant drawbacks.

In particular, the tubes present inside the multirow coaxial melt-blown systems of the prior art include only a circular outlet, which does not allow for the production of non-woven fabrics with different mechanical properties.

Therefore, conventional tubes have the sole function of channeling the polymer along an axis.

In this context, the technical task underlying the present invention is to devise a tube for a multirow coaxial melt-blown system capable of overcoming at least part of the cited drawbacks.

As part of this technical task, a significant aim of the invention is to provide a tube for a multirow coaxial melt-blown system that enables the production of non-woven fabric with different mechanical properties.

Another significant aim of the invention is to make a tube for a multirow coaxial melt-blown system that adds functionalities to those typically associated with the tubes. Furthermore, a further task of the invention is to make a tube for a multirow coaxial melt-blown system that allows to add internal stresses to the polymer exiting the die without using additional components.

The technical task and the specified objectives are achieved by a tube for a multirow coaxial melt-blown system as claimed in the attached claim 1.

Preferred technical solutions are highlighted in the dependent claims.

The characteristics and advantages of the invention are clarified by the detailed description of preferred embodiments of the invention, with reference to the accompanying drawings, wherein:
**Figure 1** shows a tube for a multirow coaxial melt-blown system according to the invention, wherein the outer surface is shaped like the inner surface;
**Figure 2a** illustrates a cross-sectional view on the sectional plane of a profile having a first concave shape of tube for a multirow coaxial melt-blown system according to the invention, wherein a convex portion is shown in dashed lines;
**Figure 2b** is a cross-sectional view on the sectional plane of a profile with a second concave shape of a tube for a multirow coaxial melt-blown system according to the invention, wherein a convex portion is shown in dashed lines;
**Figure 2c** represents a cross-sectional view on the sectional plane of a profile with a third concave shape of a tube for a multirow coaxial melt-blown system according to the invention, wherein a convex portion is shown in dashed lines;
**Figure 2d** shows a cross-sectional view on the sectional plane of a profile with a fourth convex shape of a tube for a multirow coaxial melt-blown system according to the invention;
**Figure 2e** illustrates a cross-sectional view on the sectional plane of a profile with a fifth convex shape of a tube for a multirow coaxial melt-blown system according to the invention;
**Figure 2f** is a cross-sectional view on the sectional plane of a profile with a sixth concave shape of a tube for a multirow coaxial melt-blown system according to the invention, wherein a convex portion is shown in dashed lines;
**Figure 2g** represents a cross-sectional view on the sectional plane of a profile with a seventh concave shape of a tube for a multirow coaxial melt-blown system according to the invention, wherein a convex portion is shown in dashed lines;
**Figure 2h** shows a cross-sectional view on the sectional plane of a profile with an eighth concave shape of a tube for a multirow coaxial melt-blown system according to the invention, wherein a convex portion is shown in dashed lines;
**Figure 2i** illustrates a cross-sectional view on the sectional plane of a profile with a ninth concave shape of a tube for a multirow coaxial melt-blown system according to the invention, wherein a convex portion is shown in dashed lines;
**Figure 2j** is a cross-sectional view on the sectional plane of a profile with a tenth concave shape of a tube for a multirow coaxial melt-blown system according to the invention, wherein a convex portion is shown in dashed lines;
**Figure 3a** represents a perspective view of a tube for a multirow coaxial melt-blown system according to the invention, wherein the outer surface is cylindrical and the profile has the shape shown in Figure 2a;
**Figure 3b** shows a perspective view of a tube for a multirow coaxial melt-blown system according to the invention, wherein the outer surface is cylindrical and the profile has the shape shown in Figure 2b;
**Figure 3c** illustrates a perspective view of a tube for a multirow coaxial melt-blown system according to the invention, wherein the outer surface is cylindrical and the profile has the shape shown in Figure 2c;
**Figure 3d** is a perspective view of a tube for a multirow coaxial melt-blown system according to the invention, wherein the outer surface is cylindrical and the profile has the shape shown in Figure 2d;
**Figure 3e** represents a perspective view of a tube for a multirow coaxial melt-blown system according to the invention, wherein the outer surface is cylindrical and the profile has the shape shown in Figure 2e;
**Figure 3f** shows a perspective view of a tube for a multirow coaxial melt-blown system according to the invention, wherein the outer surface is cylindrical and the profile has the shape shown in Figure 2f;
**Figure 3g** illustrates a perspective view of a tube for a multirow coaxial melt-blown system according to the invention, wherein the outer surface is cylindrical and the profile has the shape shown in Figure 2g;
**Figure 3h** is a perspective view of a tube for a multirow coaxial melt-blown system according to the invention, wherein the outer surface is cylindrical and the profile has the shape shown in Figure 2h;
**Figure 3i** represents a perspective view of a tube for a multirow coaxial melt-blown system according to the invention, wherein the outer surface is cylindrical and the profile has the shape shown in Figure 2i;
**Figure 3j** shows a perspective view of a tube for a multirow coaxial melt-blown system according to the invention, wherein the outer surface is cylindrical and the profile has the shape shown in Figure 2j;
**Figure 4a** illustrates a cross-sectional view of a tubes pack including a plurality of tubes for a multirow coaxial melt-blown system according to the invention, wherein the outer surface is shaped like the inner surface and the tubes have the same shape in the same column and alternating shapes in the same row;
**Figure 4b** is a cross-sectional view of a tubes pack including a plurality of tubes for a multirow coaxial melt-blown system according to the invention, wherein the outer surface is shaped like the inner surface and the tubes have the same shape;
**Figure 4c** represents a cross-sectional view of a tubes pack including a plurality of tubes for a multirow coaxial melt-blown system according to the invention, mutually arranged in columns and alternated with columns of tubes each defining a circular shape, wherein the outer surface is shaped like the inner surface;
**Figure 4d** shows a cross-sectional view of a tubes pack including a plurality of tubes for a multirow coaxial melt-blown system according to the invention, wherein the outer surface is shaped like the inner surface and the tubes have the same shape in the same column and respectively concave and convex shapes alternated in the same row;
**Figure 5a** illustrates a cross-sectional view of a tubes pack including a plurality of tubes for a multirow coaxial melt-blown system according to the invention, wherein the outer surface is cylindrical and the tubes have the same concave shape;
**Figure 5b** is a cross-sectional view of a tubes pack including a plurality of tubes for a multirow coaxial melt-blown system according to the invention, wherein the outer surface is cylindrical and the tubes have the same triangular convex shape;
**Figure 5c** represents a cross-sectional view of a tubes pack including a plurality of tubes for a multirow coaxial melt-blown system according to the invention, wherein the outer surface is cylindrical and the tubes have the same convex rectangular shape;
**Figure 5d** shows a cross-sectional view of a tubes pack including a plurality of tubes for a multirow coaxial melt-blown system according to the invention, wherein the outer surface is cylindrical and the tubes have the same concave star-shaped form;
**Figure 6a** illustrates a cross-sectional view of a pack of tubes including a plurality of tubes for a multirow coaxial melt-blown system according to the invention, wherein the outer surface is cylindrical, the tubes have the same concave shape, and the tubes are alternated in a checkerboard pattern with tubes having a circular shape;
**Figure 6b** is a cross-sectional view of a pack of tubes including a plurality of tubes for a multirow coaxial melt-blown system according to the invention, wherein the outer surface is cylindrical, the tubes have two different concave shapes, and the differently shaped tubes are alternated in a checkerboard pattern;
**Figure 6c** represents a cross-sectional view of a pack of tubes including a plurality of tubes for a multirow coaxial melt-blown system according to the invention, wherein the outer surface is cylindrical, the tubes have two different shapes, respectively concave and convex, and the differently shaped tubes are alternated in a checkerboard pattern; and
**Figure 6d** shows a cross-sectional view of a pack of tubes including a plurality of tubes for a multirow coaxial melt-blown system according to the invention, wherein the outer surface is cylindrical, the tubes have two different shapes, respectively concave and convex, and the differently shaped tubes are alternated in a checkerboard pattern.

In this document, dimensions, values, shapes, and geometric references (such as perpendicularity and parallelism) when associated with terms like "approximately" or other similar terms such as "substantially" or "essentially", are to be understood as within measurement errors or inaccuracies due to production and/or manufacturing errors and, particularly, within a slight deviation from the value, measurement, shape, or geometric reference to which they are associated. For example, such terms, when associated with a value, preferably indicate a deviation not exceeding 10% of the value itself.

Moreover, when used, terms like "first", "second", "upper", "lower", "primary", and "secondary" do not necessarily identify an order, a priority of relation, or relative position, but can be used simply to distinguish between different components.

Unless otherwise specified, as appears from the following discussions, it is considered that terms such as "processing", "computing", "determination", "calculation", or similar refer to the actions and/or processes of a computer or similar electronic computing device that manipulates and/or transforms data represented as physical quantities such as electrical quantities in registers of a computer system and/or memory into other data similarly represented as physical quantities within computer systems, registers, or other storage, transmission, or display devices.

The measurements and data reported in this document are to be considered, unless otherwise indicated, as made in International Standard Atmosphere (ICAO Standard Atmosphere ISO 2533:1975).

With reference to the Figures, the tube for a multirow coaxial melt-blown system according to the invention is globally denoted by number 1.

The tube 1 is, as such, an element of substantially elongated shape, including a cavity through which liquid polymer can flow to allow extrusion, for example, from a die.

The tube 1, therefore, defines a development axis 1a.

The development axis 1a is substantially the axis around which the tube 1 is developed. Moreover, the development axis 1a is the axis along which the liquid polymer can flow and, therefore, it is the axis along which the cavity defined by the tube 1 is developed.

The tube 1, therefore, includes at least one inner surface 2.

The inner surface 2 is substantially closed. Moreover, it is developed around the development axis 1a, being in fact facing it.

The inner surface 2, therefore, encloses the cavity.

Furthermore, tube 1 defines a plurality of profiles 3. The profiles 3 are mutually identical. Additionally, they are arranged in succession along the development axis 1a.

Thus, the profiles 3 are substantially formed along the development axis 1a by the inner surface 2 and determine the overall shape of the cavity.

In particular, preferably, the profile 3 is defined on a sectional plane 1b.

The sectional plane 1b is preferably perpendicular to the development axis 1a. Thus, the sectional plane 1b is substantially a virtual plane that, by cutting the tube 1 perpendicularly to the development axis 1a, defines the profile 3 formed by the inner surface 2 on itself.

Moreover, the profile 3 defines a first extension area. The extension area is the portion of two-dimensional space contained within the profile 3.

Thus, the profile 3 can preferably be inscribed in a circle. The circle is also determined on the sectional plane 1b. Naturally, the circle is a simple virtual geometric element within which the profile 3 can be geometrically inscribed.

The circle, in addition, defines a second extension area on the sectional plane 1b. Hence, since the second extension area is determined by the two-dimensional space contained within the circle, it can be, as is known, calculated using the formula A = π*r².

Advantageously, the profile 3 does not correspond to the shape of the circle.

In fact, advantageously, the first extension area is less than 90% of the second extension area. Even more in detail, preferably, the first extension area is less than 60% of the second extension area.

Thus, the profile 3 can be made according to different embodiments.

For example, the profile 3 can be a convex figure. As is known, a convex figure is one wherein every segment joining any two points of it is entirely contained within the figure itself.

Therefore, if the profile 3 is convex, it preferably defines a first dimension 3a and a second dimension 3b.

The first dimension 3a is substantially the maximum dimension that the profile 3 determines in one direction. The second dimension 3b is also the maximum dimension in a direction perpendicular to the first dimension 3a.

Preferably, the second dimension 3b is less than 90% of the first dimension 3a. Even more in detail, the second dimension 3b may be less than 60% of the first dimension 3a.

Moreover, dimensions may refer to well-defined geometric profiles 3.

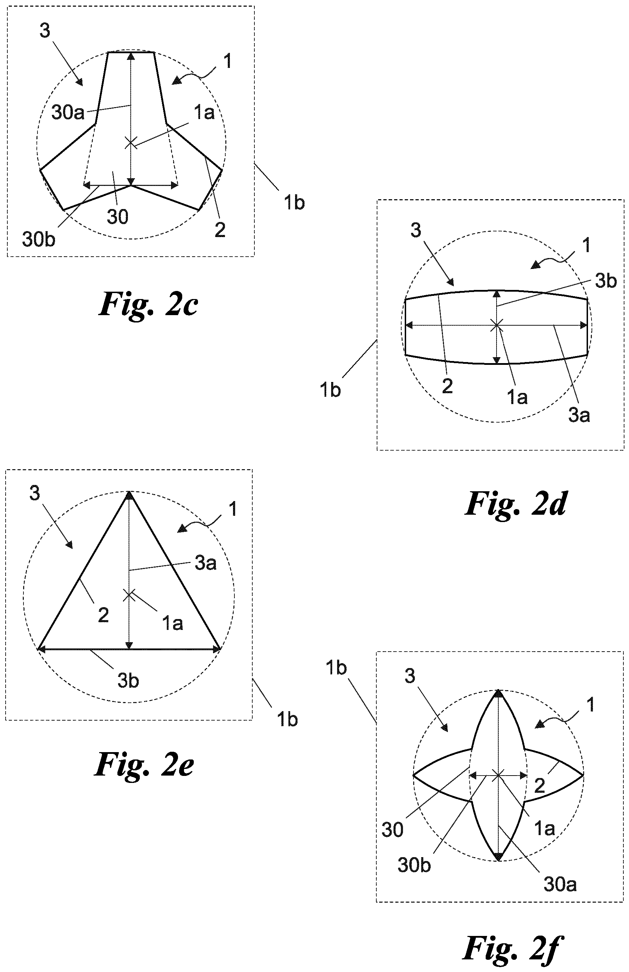

For example, a convex profile 3 may have an approximately equilateral triangular shape, as shown in Figure 2d, or an approximately rectangular shape, possibly slightly curved at the sides, as shown in Figure 2e.

Naturally, in the case of a triangle, the first dimension 3a may be given by the height, while the second dimension 3b may be given by the base side on which the height lies. In the case of a rectangle, dimensions 3a and 3b may correspond to the respective sides.

In other embodiments, the profile 3 may be concave instead. Dually to convexity, the concavity of a figure is evident when there is at least one segment joining a pair of points of the figure that is not entirely contained within the figure itself.

Therefore, if the profile 3 is concave, it preferably includes at least one convex portion 30. The convex portion 30 is a part of the concave profile 3 that can be identified within the profile 3, so as to be delimited at least in part, and that exhibits the characteristic of convexity.

Therefore, the convex portion 30, like the convex profile 3, can define a third dimension 30a and a fourth dimension 30b.

The third dimension 30a is substantially the maximum dimension that the convex portion 30 determines in one direction. The fourth dimension 30b is also the maximum dimension in a direction perpendicular to the third dimension 30a. Preferably, the fourth dimension 30b is less than 90% of the third dimension 30a. Even more in detail, the fourth dimension 30b may be less than 60% of the third dimension 30a.

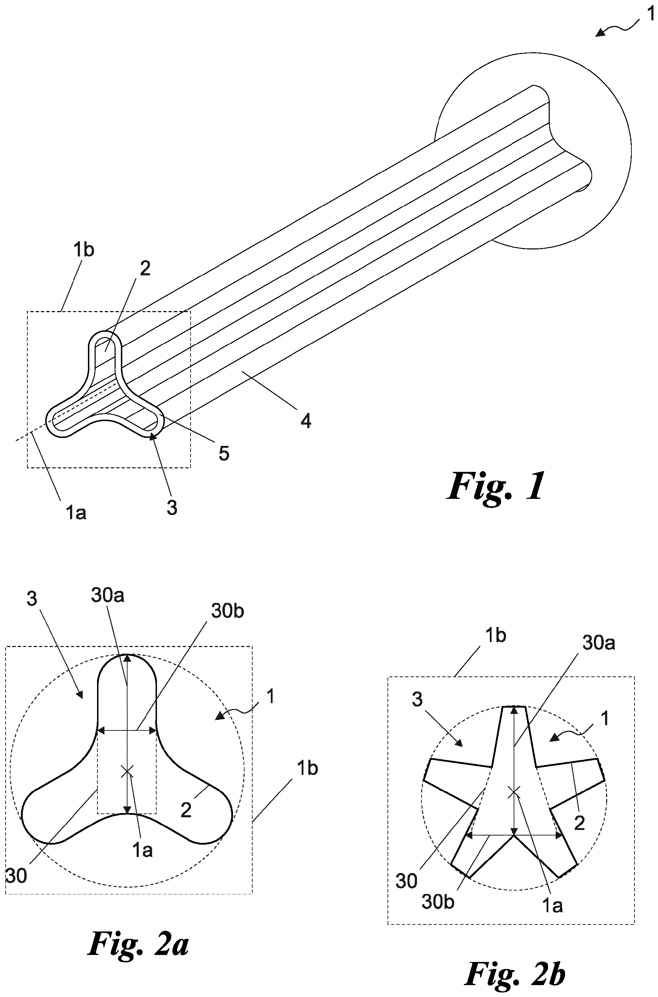

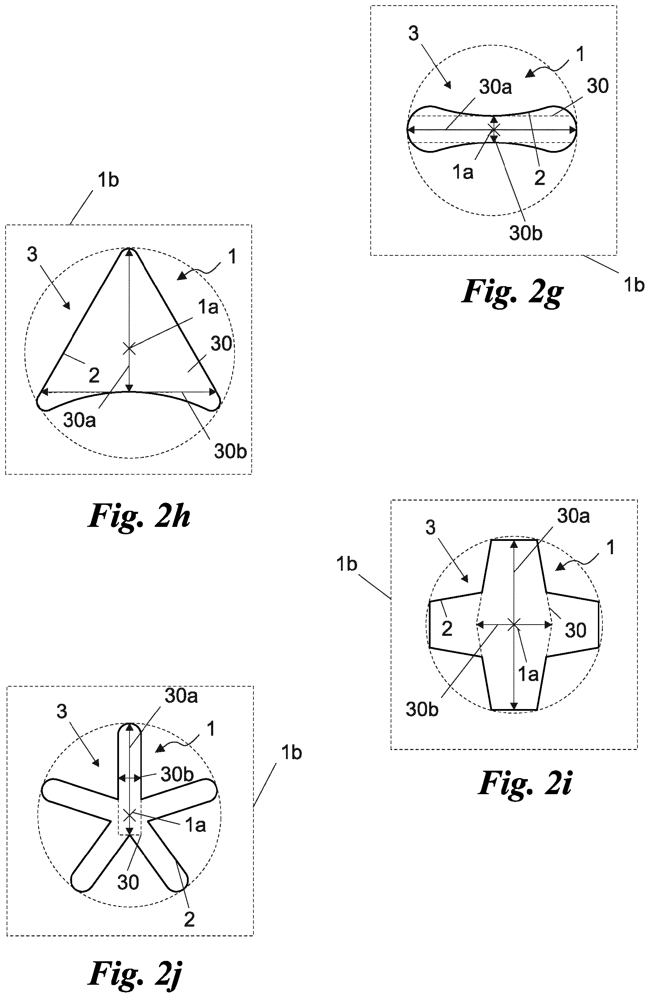

As previously mentioned, dimensions may refer to well-defined geometric convex portions 30. For example, a convex portion 30 of a profile 3 may have an approximately triangular shape, as shown in Figure 2h, or an approximately rectangular shape, as shown in Figures 2g and 2j, possibly with one side beveled as in Figure 2a, or even trapezoidal, as shown in Figures 2b-2c.

Naturally, in the case of a triangle, the first dimension 3a may be given by the height, while the second dimension 3b may be given by the base side on which the height lies. In the case of a rectangle, dimensions 3a and 3b may correspond to the respective sides.

More generally, a concave profile 3 may be formed by two or more convex portions 30 intersecting one another. Thus, the concave profile 3 may define a cross shape having three to five pointed ends. For example, three as in Figures 2a and 2c, or four as in Figures 2f and 2i, or even five as in Figures 2b and 2j.

In addition to what has been described, the tube 1 may also include an outer surface 4.

The outer surface 4 is also closed. Moreover, the outer surface 4 develops around the inner surface 2. Thus, the outer surface 4 surrounds the inner surface 2. Preferably, moreover, the outer surface 4, which faces the outside of tube 1 and therefore is not in contact with the cavity, is connected to the inner surface 2 through a wall 5.

The wall 5 is thus surrounded by surfaces 2 and 4, and therefore the surfaces define faces opposite to the wall 5.

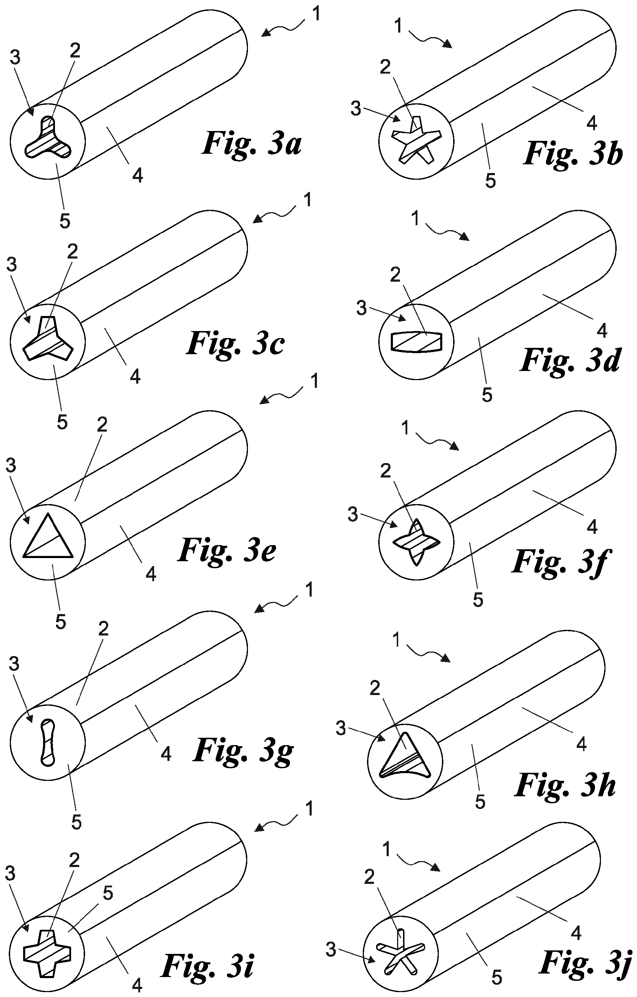

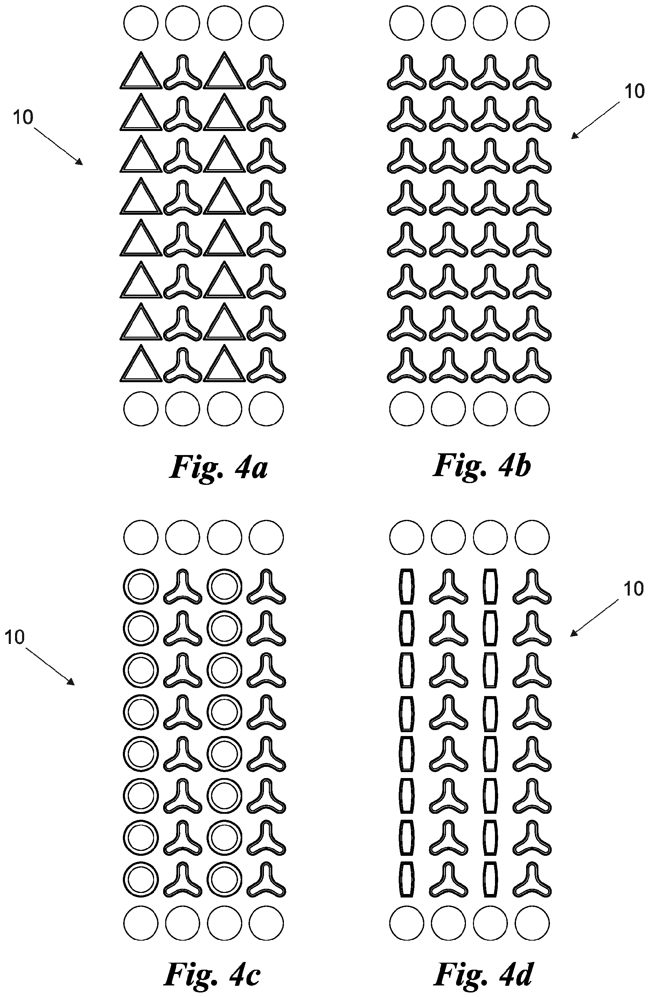

The outer surface 4 may therefore be cylindrical, as shown in Figures 3a-3j, 5a-5d, and 6a-6d, or the outer surface 4 may alternatively be shaped like the inner surface 2. In this way, surfaces 2 and 4 determine a constant thickness for the wall 5, as shown, for example, in Figures 1 and 4a-4d.

Naturally, tube 1 may be used with other tubes to form a pack of tubes to be used in a system.

Therefore, the invention also includes a pack of tubes including a plurality of tubes 1.

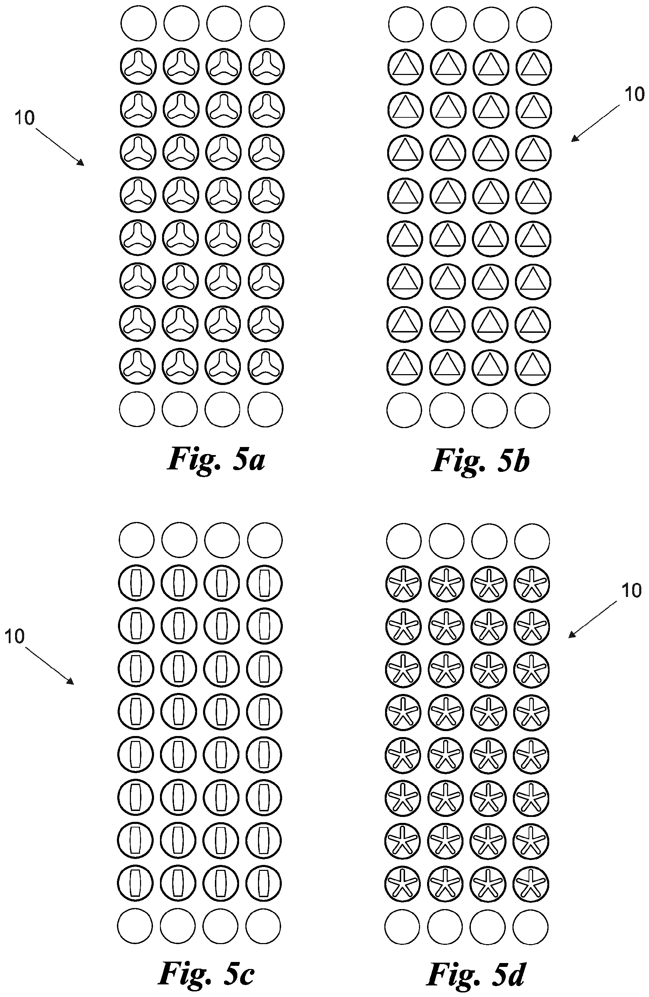

Among the various embodiments, the pack may include a plurality of tubes 1, all defining the same profile 3, as in Figures 5a-5d.

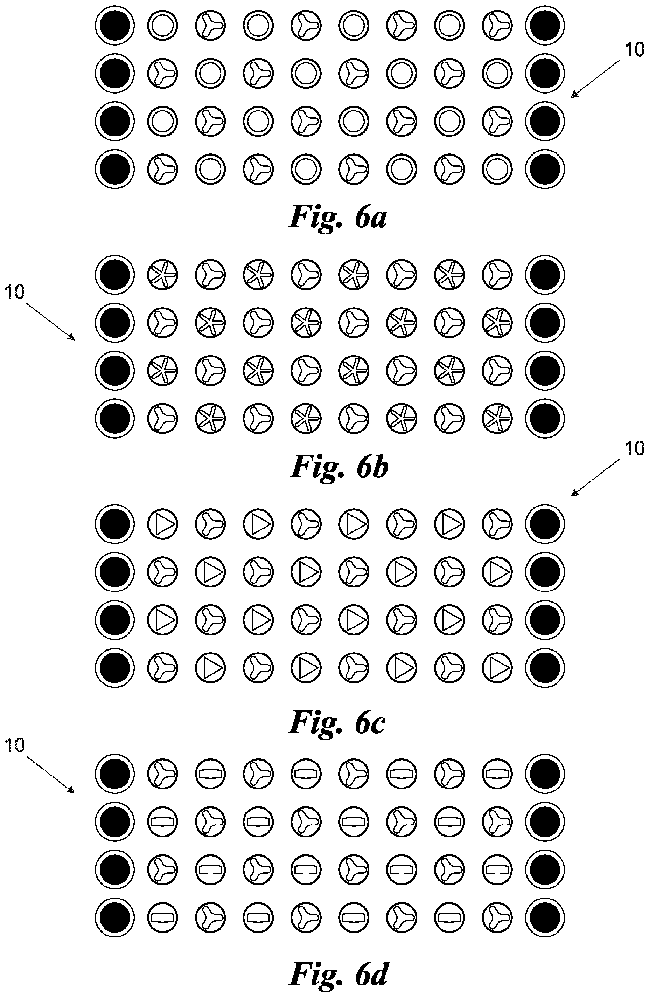

Alternatively, the pack may include a plurality of said tubes 1 defining respective mutually different profiles 3, as in Figures 4a-4d and 6b-6d.

Alternatively, again, the pack may include a plurality of tubes 1 and a plurality of tubes defining each a circular profile, i.e., having a conventional profile according to prior art, as in Figures 4c and 6a.

Naturally, the invention also includes a multirow coaxial melt-blown system comprising a pack of tubes as just described according to the various possible embodiments.

The operation of the tube 1 for a multirow coaxial melt-blown system, as previously described in structural terms, is substantially similar to the operation of any tube of the prior art, in that it allows the polymer fluid to be conveyed along the development axis 1a.

However, the tube 1 for a multirow coaxial melt-blown system according to the invention achieves important advantages.

In fact, the tube 1 for a multirow coaxial melt-blown system allows the production of non-woven fabric with different mechanical properties compared to non-woven fabrics made with conventional tubes.

Thus, the tube 1 for a multirow coaxial melt-blown system adds functionalities to those typically associated with tubes.

In particular, the tube 1 for a multirow coaxial melt-blown system allows the introduction of internal stresses to the polymer exiting the die without using additional components.

The invention is susceptible to variations falling within the scope of the inventive concept defined by the claims.

Within this scope, all details may be replaced by equivalent elements, and the materials, shapes, and dimensions may be of any kind.

## Claims

1. A tube (1) for a multirow coaxial melt-blown system, defining a development axis (1a) and comprising at least one closed inner surface (2) that extends around said development axis (1a) and defines a plurality of mutually identical profiles (3) arranged one after the other along said development axis (1a);
- said profile (3) being defined on a sectional plane (1b) perpendicular to said development axis (1a), defining a first extension area on said sectional plane (1b), and being inscribable in a circle defined on said sectional plane (1b) and defining a second extension area on said sectional plane (1b);
said tube (1) being **characterized in that**
- said first extension area is less than 90% of said second extension area.

2. The tube (1) according to claim 1, wherein said first extension area is less than 60% of said second extension area.

3. The tube (1) according to any preceding claim, wherein said profile (3) is convex and defines at least a first maximum dimension (3a) and a second maximum dimension (3b) perpendicular to said first dimension (3a), wherein said second dimension (3b) is less than 90% of said first maximum dimension (3a).

4. The tube (1) according to the preceding claim, wherein said second dimension (3b) is less than 60% of said first dimension (3a).

5. The tube (1) according to the preceding claim, wherein said profile (3) defines an approximately equilateral triangular shape or an approximately rectangular shape.

6. The tube (1) according to any of claims 1-2, wherein said profile (3) is concave and includes at least one convex portion (30) identifiable within said profile (3), such that it is at least partially delimited by said profile (3), and defining at least a third maximum dimension (30a) and a fourth maximum dimension (30b) perpendicular to said third dimension (30a), wherein said fourth dimension (30b) is less than 90% of said third maximum dimension (30a).

7. The tube (1) according to the preceding claim, wherein said fourth dimension (30b) is less than 60% of said third dimension (30a).

8. The tube (1) according to any of claims 6-7, wherein said profile (3) is formed by two or more intersecting convex portions (30).

9. The tube (1) according to the preceding claim, wherein said profile (3) defines a cross shape having three to five pointed ends.

10. The tube (1) according to any preceding claim, comprising at least one closed outer surface (4) that extends around the inner surface (2) and is connected to said inner surface (2) via a wall (5) so that said surfaces (2, 4) define opposite faces of said wall (5), said outer surface (4) being cylindrical or shaped like said inner surface (2), thereby determining a constant thickness for said wall (5).

11. A pack of tubes (10) for a multirow coaxial melt-blown system, comprising at least one tube (1) according to any preceding claim.

12. The pack of tubes (10) according to the preceding claim, comprising a plurality of said tubes (1) all defining one and the same profile (3).

13. The pack of tubes (10) according to any of claims 11-12, comprising a plurality of said tubes (1) defining mutually different profiles (3).

14. The pack of tubes (10) according to any of claims 11-13, comprising a plurality of said tubes (1) and a plurality of tubes each defining a circular profile.

15. A multirow coaxial melt-blown system comprising a pack of tubes (10) according to any of claims 11-14.
